Europäisches Patentamt
European Patent Office
Office européen des brevets

(11) Veröffentlichungsnummer: **0 242 850**
**A1**

(12) # EUROPÄISCHE PATENTANMELDUNG

(21) Anmeldenummer: **87105844.2**

(51) Int. Cl.4: **C09B 62/51**, D06P 1/384

(22) Anmeldetag: **21.04.87**

(30) Priorität: **25.04.86 DE 3614045**

(43) Veröffentlichungstag der Anmeldung:
**28.10.87 Patentblatt 87/44**

(84) Benannte Vertragsstaaten:
**BE CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Russ, Werner Hubert, Dr.**
**Berliner Strasse 10**
**D-6238 Hofheim am Taunus(DE)**

(54) **Wasserlösliche Monoazoverbindungen, Verfahren zu ihrer Herstellung und ihre Verwendung als Farbstoffe.**

(57) Wasserlösliche Azoverbindungen mit faserreaktiven Farbstoffeigenschaften entsprechend einer allgemeinen Formel

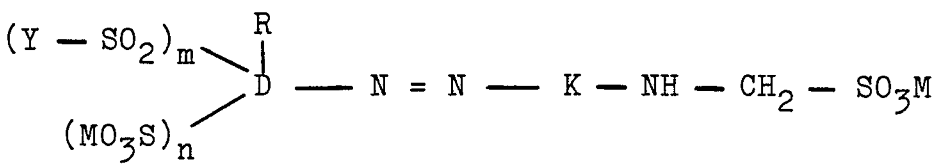

in welcher:
D ist ein Benzol-oder Naphthalinring;
R ist Wasserstoff, Alkyl von 1 bis 4 C-Atomen, Alkoxy von 1 bis 4 C-Atomen, Hydroxy, Chlor, Brom oder Carboxy;
K ist ein Rest der allgemeinen Formel

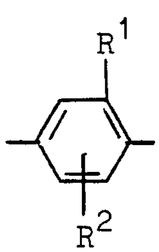

oder

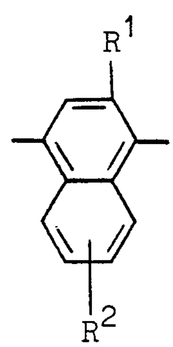

in welchen
$R^1$ Wasserstoff, Alkyl von 1 bis 4 C-Atomen, gegebenenfalls substituiertes Alkoxy von 1 bis 4 C-Atomen, Halogen Sulfo, Ureido oder Alkanoylamino von 2 bis 5 C-Atomen ist und
$R^2$ Wasserstoff, Alkyl von 1 bis 4 C-Atomen, Alkoxy von 1 bis 4 C-Atomen, Halogen, Sulfo, Ureido oder Alkanoylamino von 2 bis 5 C-Atomen ist;
M ist Wasserstoff, ein Alkalimetall oder das Äquivalent eines Erdalkalimetalls;

EP 0 242 850 A1

Y ist die Vinylgruppe oder ist eine Ethylgruppe, die in β-Stellung durch einen alkalisch eliminierbaren Substituenten substituiert ist;

m ist die Zahl 1 oder 2;

n ist die Zahl Null, 1 oder 2.

Die Monoazoverbindungen färben hydroxy-und/oder carbonamidgruppenhaltiges Material, vorzugsweise Fasermaterial, insbesondere Cellulosefasermaterialien, in kräftigen, echten, vorwiegend rotstichig gelben bis orangen Farbtönen.

# Wasserlösliche Monoazoverbindungen, Verfahren zu ihrer Herstellung und ihre Verwendung als Farbstoffe

Die Erfindung liegt auf dem technischen Gebiet der faserreaktiven Azofarbstoffe.

Aus der europäischen Patentanmeldungs-Veröffentlichung Nr. 0 073 481 A2 sowie aus der US-PS 4 283 196 sind faserreaktive Azofarbstoffe mit Anilinkupplungskomponenten bekannt, die jedoch den Mangel aufweisen, daß sie phototrop sind.

Mit der vorliegenden Erfindung wurden neue, wertvolle wasserlösliche Azoverbindungen entsprechend einer allgemeinen Formel (1)

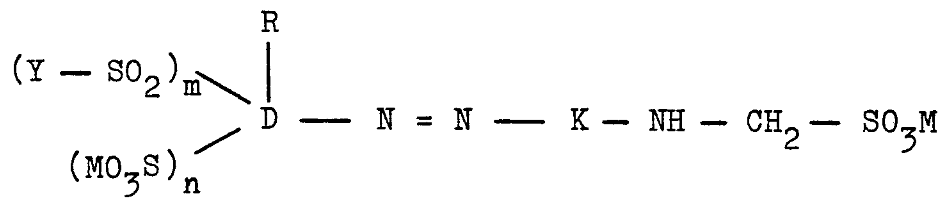

(1)

mit deutlich verbesserten Eigenschaften, insbesondere einer deutlich verringerten Phototropie, gefunden. In dieser Formel bedeuten:

D ist ein Benzolring oder ein Naphthalinring, wobei im Falle des Naphthalinringes die Azogruppe an diesen bevorzugt in 2-Stellung gebunden ist;

K ist ein Rest der allgemeinen Formel (2a) oder (2b)

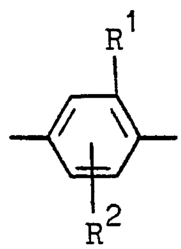

(2a)

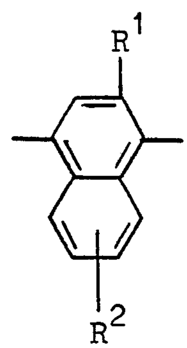

(2b)

in welchen

$R^1$ ein Wasserstoffatom, eine Alkylgruppe von 1 bis 4 C-Atomen, wie die Ethyl-und Methylgruppe, oder eine Alkoxygruppe von 1 bis 4 C-Atomen, wie die Ethoxy-und Methoxygruppe, ist, wobei die Alkoxygruppe substituiert sein kann, wie beispielsweise durch eine Hydroxygruppe oder eine Alkoxygruppe von 1 bis 4 C-Atomen, wie die Methoxy-und Ethoxygruppe, oder $R^1$ ein Halogenatom, wie das Bromatom und insbesondere das Chloratom, eine Sulfogruppe, die Ureidogruppe oder eine Alkanoylaminogruppe von 2 bis 5 C-Atomen, wie Acetylamino-oder Propionylaminogruppe, ist und

$R^2$ ein Wasserstoffatom, eine Alkylgruppe von 1 bis 4 C-Atomen, wie die Ethyl-und Methylgruppe, eine Alkoxygruppe von 1 bis 4 C-Atomen, wie die Ethoxy-und Methoxygruppe, ein Halogenatom, wie das Bromatom und insbesondere das Chloratom, eine Sulfogruppe, die Ureidogruppe oder eine Alkanoylaminogruppe von 2 bis 5 C-Atomen, wie Acetylamino-oder Propionylaminogruppe, ist;

R ist ein Wasserstoffatom oder eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, die Hydroxygruppe, ein Chloratom, ein Bromatom oder eine Carboxygruppe;

M ist ein Wasserstoffatome oder ein Alkalimetall, wie Lithium Natrium oder Kalium, oder das Äquivalent eines Erdalkalimetalls, wie des Calciums, bevorzugt jedoch ein Wasserstoffatom oder ein Alkalimetall;

Y ist die Vinylgruppe oder die Ethylgruppe, die in $\beta$-Stellung durch einen alkalisch eliminierbaren Substituenten substituiert ist, wie beispielsweise durch eine Thiosulfato-, Phosphato-oder Acetoxygruppe oder ein Chloratom oder bevorzugt eine Sulfatogruppe;

m steht für die Zahl 1 oder 2;

n steht für die Zahl Null, 1 oder 2 (wobei im Falle Null diese Gruppe ein Wasserstoffatom bedeutet).

Bevorzugt ist $R^1$ ein Wasserstoffatom, eine Methyl-, Ethyl-, Methoxy-, Ethoxy-, Acetylamino-, Propionylamino-oder 2-Methoxy-ethoxy-Gruppe; bevorzugt ist $R^2$ eine Methyl-, Ethyl-, Methoxy-, Ethoxy, Sulfo-, Acetylamino-oder Propionylaminogruppe. Insbesondere bevorzugt ist im Rest der Formel (2a) $R^1$ ein Wasserstoffatom oder eine Methyl-, Ethyl-oder Methoxygruppe und $R^2$ ein Wasserstoffatom oder insbesondere eine Methyl-, Ethyl-, Methoxy-oder Acetylaminogruppe, und insbesondere bevorzugt ist im Rest der Formel (2b) $R^1$ ein Wasserstoffatom und $R^2$ eine Sulfogruppe.

Bevorzugt ist R ein Wasserstoffatom oder die Methoxygruppe, insbesondere ein Wasserstoffatom.

Bevorzugt steht m für die Zahl 1, und bevorzugt ist n die Zahl Null oder 1, falls D gleich ein Benzolring ist, oder ist 1 oder 2, falls D gleich ein Naphthalinring ist.

Die einzelnen Formelglieder können eine zueinander gleiche oder eine voneinander verschiedene Bedeutung besitzen.

Im vorstehenden sowie im nachstehenden bedeuten Sulfogruppen Gruppen entsprechend der allgemeinen Formel $-SO_3M$ , Carboxygruppen Gruppen der allgemeinen Formel -COOM , Phosphatogruppen Gruppen der allgemeinen Formel $-OPO_3M_2$ , Thiosulfatogruppen Gruppen der allgemeinen Formel $-S-SO_3M$ und Sulfatogruppen Gruppen der allgemeinen Formel $-OSO_3M$ , jeweils mit M der obengenannten Bedeutung.

Die erfindungsgemäßen Azoverbindungen können in Form ihrer freien Säure und in Form ihrer Salze vorliegen; bevorzugt sind sie in Form der Alkalimetallsalze, insbesondere der neutralen Salze. Sie finden bevorzugt in Form dieser Salze ihre Verwendung zum Färben und Bedrucken von hydroxy-und/oder carbonamidgruppenhaltigen Materialien, insbesondere Fasermaterialien.

Die vorliegende Erfindung betrifft weiterhin ein Verfahren zur Herstellung der Azoverbindungen der allgemeinen Formel (1), das dadurch gekennzeichnet ist, daß man das Diazoniumsalz einer Aminoverbindung der allgemeinen Formel (3)

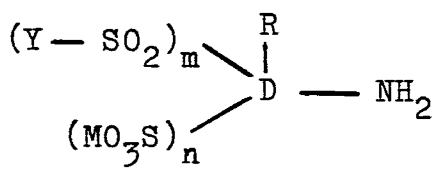 (3)

in welcher D, R, M, Y, m and n die obengenannten Bedeutungen haben, mit einer Verbindung der allgemeinen Formel (4)

$H - K - NH - CH_2 -SO_3M$ (4)

in welcher K und M die obengenannten Bedeutungen haben, in an und für sich üblicher Verfahrensweise kuppelt.

Das Diazoniumsalz des Amins der allgemeinen Formel (3) erhält man in gängiger Weise durch Diazotierung des Amins (3), beispielsweise in wäßriger Lösung und bei einem pH-Wert zwischen 0 und 2 und einer Temperatur zwischen -5°C und +50°C, bevorzugt zwischen 0 und 15°C. Die Kupplungsreaktion wird ebenso bevorzugt in wäßrigem Medium durchgeführt und erfolgt bei einer Temperatur zwischen 0 und 70°C, bevorzugt zwischen 0 und 30°C, und einem pH-Wert zwischen 1 und 7, bevorzugt zwischen 4 und 7. Die bei der Kupplungsreaktion freiwerdende Säure kann durch Zusatz der hierfür üblichen säurebindenden Mittel, wie beispielsweise durch ein Alkali-oder Erdalkalihydroxid, -carbonat, -hydrogencarbonat, -acetat oder -phosphat, wie insbesondere durch Lithium-, Natrium-oder Kaliumcarbonat, neutralisiert werden.

Die als Ausgangsverbindung dienende Kupplungskomponente der allgemeinen Formel (4) läßt sich nach literaturbekannten Verfahren synthetisieren, beispielsweise indem man ein Amin der allgemeinen Formel (5)

$H - K - NH_2$ (5)

in welcher K die obengenannte Bedeutung besitzt, mit Formaldehyd und Natriumhydrogensulfit oder mit Hydroxymethansulfonsäure-Natrium kondensiert, wobei diese Umsetzungen vorzugsweise in der Schmelze oder in wäßriger Lösung, gegebenenfalls unter Verwendung eines Hilfslösemittels, wie beispielsweise Aceton oder ein Alkanol von 1 bis 5 C-Atomen, bei einer Temperatur zwischen 20 und 200°C, gegebenenfalls unter Druck, erfolgen. Die Kupplungskomponenten der allgemeinen Formel (4) können in der Reaktionslösung direkt - oder nach Zwischenisolierung und -reinigung durch Aussalzen mit Natrium-oder Kaliumchlorid oder Natriumsulfat - in die erfindungsgemäße Kupplungsreaktion zur Synthese der Azoverbindungen der allgemeinen Formel (1) eingesetzt werden.

Aminoverbindungen der allgemeinen Formel (3), die in erfindungsgemäßer Weise zur Synthese der erfindungsgemäßen Verbindungen (1) dienen und eine faserreaktive Gruppe der oben definierten Formel $-SO_2-Y$ enthalten, sind beispielsweise: 1-Amino-4-(β-sulfatoethylsulfonyl)-benzol, 1-Amino-3-(β-sulfatoethylsulfonyl)-benzol, 1-Amino-2-(β-sulfatoethylsulfonyl)-benzol, 1-Amino-2-methoxy-5-(β-sulfatoethylsulfonyl)-benzol, 1-Amino-2-methoxy-4-(β-sulfatoethylsulfonyl)-benzol, 1-Amino-4-methoxy-3-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methyl-5-(β-sulfatoethylsulfonyl)-benzol, 1-Amino-4-methyl-3-(β-sulfatoethylsulfonyl)-benzol, 1-Amino-2-chlor-4-(β-sulfatoethylsulfonyl)-benzol, 1-Amino-2-chlor-5-(β-sulfatoethylsulfonyl)-benzol, 1-Amino-4-chlor-5-(β-sulfatoethylsulfonyl)-benzol, 1-Amino-2-brom-4-(β-sulfatoethylsulfonyl)-benzol, 1-Amino-2-carboxy-5-(β-sulfatoethylsulfonyl)-benzol, 1-Amino-2-carboxy-4-(β-sulfatoethylsulfonyl)-benzol, 1-Amino-2-sulfo-4-(β-sulfatoethylsulfonyl)-benzol, 1-Amino-2-sulfo-5-(βsulfatoethylsulfonyl)-benzol, 1-Amino-2,5-dimethoxy-4-(β-sulfatoethylsulfonyl)-benzol, 1-Amino-2,4-dimethoxy-5-(β-sulfatoethylsulfonyl)-benzol, 1-Amino-2,5-diethoxy-4-(β-sulfatoethylsulfonyl)-benzol, 1-Amino-2-methoxy-5-methyl-4-(β-sulfatoethylsulfonyl)-benzol, 1-Amino-2-methyl-5-methoxy-4-(β-sulfatoethylsulfonyl)-benzol, 1-Amino-2,5-dimethyl-4-(β-sulfatoethylsulfonyl)-benzol, 1-Amino-2,4-disulfo-5-(β-sulfatoethylsulfonyl)-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfatoethylsulfonyl)-naphthalin, 1-Amino-5-(β-sulfatoethylsulfonyl)-naphthalin, 1-Amino-5-(β-sulfatoethylsulfonyl)-naphthalin, 1-Amino-7-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfatoethylsulfonyl)-naphthalin, 1-Amino-2,5-bis-(β-sulfatoethylsulfonyl)-benzol, 1-Amino-3,4-bis-(β-sulfatoethylsulfonyl)-benzol sowie deren entsprechenden β-Thiosulfatoethylsulfonyl-, β-Phosphatoethylsulfonyl-, β-Acetyloxyethylsulfonyl-, β-Chlorethylsulfonyl-und Vinylsulfonyl-Derivate.

Amine der allgemeinen Formel (4), die in erfindungsgemäßer Weise zur Synthese der erfindungsgemäßen Verbindungen (1) dienen, sind beispielsweise die N-(Sulfomethyl)-Verbindungen von Anilin, 3-Methyl-anilin, 3-Ethyl-anilin, 3-Methoxyanilin, 3-Ethoxy-anilin, 3-Acetamido-anilin, 3-Ureido-anilin, 3-Propionylamido-anilin, 3-Chlor-anilin, 2,5-Dimethyl-anilin, 2-Methoxy-5-methyl-anilin, 5-Chlor-2-methyl-anilin, 2-Chlor-5-methyl-anilin, 2-Methyl-5-methoxy-anilin, 2,5-Dimethoxy-anilin, 2-Chlor-5-methoxy-anilin, 2,3-Dimethyl-anilin, 2,5-Diethyl-anilin, 2,5-Diethoxy-anilin, 2-Acetylamino-5-ethoxy-anilin, 2-Acetylamino-5-methoxy-anilin, 5-Acetylamino-2-methyl-anilin, 5-Acetylamino-2-methoxy-anilin, 5-Acetylamino-2-(β-methoxyethoxy)-anilin, 5-Acetylamino-2-ethoxy-anilin, 2-Methyl-5-ureido-anilin, 2-Methyl-5-propionylamino-anilin, 2-Methoxy-5-propionylamino-anilin, 2-(β-Methoxyethoxy)-5-propionylamino-anilin, 5-Acetylamino-2-sulfo-anilin, 5-Propionylamino-2-sulfo-anilin, 1-Aminonaphthalin-6-sulfonsäure, 1-Aminonaphthalin-7-sulfonsäure, 1-Aminonaphthalin-8-sulfonsäure und 1-Aminonaphthalin-3,6-disulfonsäure.

Die Abscheidung und Isolierung der erfindungsgemäß hergestellten Verbindungen (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, und anschließende Filtration oder durch Eindampfen der Reaktionslösung, beispielsweise durch Sprühtrocknung; hierbei kann der Reaktionslösung eine Puffersubstanz zugefügt werden. Die neuen erfindungsgemäßen Verbindungen haben faserreaktive Eigenschaften und besitzen sehr gute Farbstoffeigenschaften. Sie können deshalb zum Färben von hydroxy-und/oder carbonamidgruppenhaltigem Material, insbesondere Fasermaterial, wie auch von Leder, verwendet werden. Ebenso können die bei der Synthese der erfindungsgemäßen Verbindungen anfallenden Lösungen, gegebenenfalls nach Zusatz einer Puffersubstanz, gegebenenfalls nach Konzentrierung oder teilweiser Entsalzung, direkt als Flüssigpräparation der färberischen Verwendung zugeführt weden.

Gegenstand der vorliegenden Erfindung ist deshalb auch die Verwendung der erfindungsgemäßen Verbindungen der allgemeinen Formel (1) zum Färben von hydroxy-und/oder carbon amidgruppenhaltigen Materialien bzw. Verfahren zu deren Anwendung auf diesen Substraten. Eingeschlossen sind hierbei die Massefärbung, beispielsweise von Folien aus Polyamid, und die Färbung durch Bedrucken.

Bevorzugt kommen die Materialien in Form von Fasermaterialien zur Anwendung, insbesondere in Form von Textilfasern, wie Garnen, Wickelkörpern und Geweben. Hydroxygruppenhaltige Materialien sind

natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern, regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren und liefern farbstarke Färbungen mit guten Echtheiten. Die Färbungen zeichnen sich zudem in überraschender und nicht vorhersehbarer Weise, insbesondere auf Cellulosefasermaterialien, durch ihre gute Schweißlichtechtheit und durch deren geringe Phototropie aus.

Die erfindungsgemäßen Azoverbindungen sind sowohl für das Färben nach dem Auszieh-und Klotzverfahren als auch in Druckverfahren gleichermaßen geeignet.

So erhält man mit ihnen auf Cellulosefasern nach den Ausziehverfahren aus langer Flotte unter Verwendung von ver schiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bei Temperaturen zwischen 40 und 105°C, gegebenenfalls bei Temperaturen bis zu 130°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, - beispielsweise durch Bedrucken mit einer Natriumbicarbonat oder ein anderes säurebindendes Mittel und die erfindungsgemäße Verbindung enthaltenden Druckpaste und durch anschließendes Dämpfen bei 100 bis 103°C, - oder zweiphasig, - beispielsweise durch Bedrucken mit neutraler oder schwach saurer, die erfindungsgemäße Verbindung enthaltende Druckpaste und anschließendes Fixieren durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium-und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Warmwasserlöslichkeit auswaschen lassen.

Die Färbungen auf Polyurethan-und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Azoverbindungen hergestellten Färbungen und Drucke auf Cellulosefasermaterialien besitzen eine hohe Farbstärke, außerdem gute Lichtechtheiten und sehr gute Naßechtheiten, wie Wasch-, Walk-, Wasser-, Seewasser-, Überfärbe-und Schweißechtheiten, darüber hinaus eine gute Plissierechtheit, Bügelechtheit und Reibechtheit. Besonders hervorzuheben sind deren alkalische Schweißlichtechtheit und die gute Naßlichtechtheit der mit Trinkwasser benetzten Färbungen sowie deren geringe Phototropie.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium-oder Kaliumsalze, in die Synthese eingesetzt werden.

Die in den Beispielen für die erfindungsgemäßen Azoverbindungen genannten Absorptionsmaxima ($\lambda_{max}$-Werte) im sichtbaren Bereich wurden für deren Alkalisalze aus wäßriger Lösung ermittelt.

Beispiel 1

a) Man erwärmt ein Gemisch aus 315 Teilen einer 40%igen wäßrigen Natriumbisulfitlösung und 115 Teilen einer etwa 35%igen wäßrigen Formaldehydlösung 30 Minuten bei 70°C und läßt diese Lösung unter gutem Rühren in eine Mischung aus 121 Teilen 2,5-Dimethylanilin in 350 Teilen Wasser einlaufen, erwärmt das Ganze auf 90°C und rührt noch 60 bis 90 Minuten bei dieser Temperatur nach, bis kein diazotierbares Amin mehr nachweisbar ist. Die Isolierung der so hergestellten Kupplungskomponente erfolgt durch Zugabe von Natriumchlorid (in einer Menge von 10 %, bezogen auf das Volumen des Ansatzes), Abkühlen des Ansatzes unter Rühren auf Raumtemperatur und Filtration. Der scharf abgesaugte feuchte Preßkuchen wird sodann in 2000 Teile Wasser eingerührt, und die Suspension wird auf einen pH-Wert von 6 eingestellt.

b) Zu der unter a) hergestellten Suspension der Kupplungskomponente läßt man langsam unter Rühren eine aus 281 Teilen 4-($\beta$-Sulfatoethylsulfonyl)-aminobenzol durch übliche Diazotierung in einer Mischung von 1500 Teilen Wasser/Eis und 55 Teilen conc. Schwefelsäure mittels 201 Teilen einer wäßrigen 5n-Natriumnitritlösung hergestellte Diazoniumsalzsuspension einlaufen, wobei man den pH mittels Natriumcarbonat auf einen Wert von 5 hält. Man rührt 2 Stunden nach und erwärmt sodann auf 50°C, gibt 5 Teile Kieselgur hinzu, filtriert ab und isoliert die erfindungsgemäße Verbindung bei einem pH-Wert von 5 durch Sprühtrocknung oder Eindampfen oder durch Aussalzen mit Natrium-oder Kaliumchlorid und anschließender Trocknung.

Die in Form des Natriumsalzes isolierte erfindungsgemäße Verbindung ($\lambda_{max}$ = 430 nm) der Formel (in Form der freien Säure geschrieben)

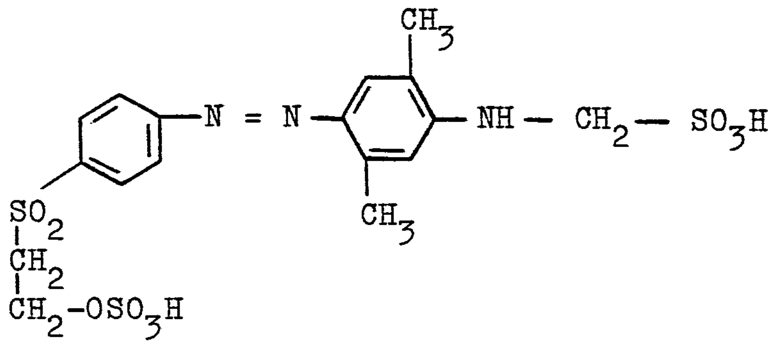

besitzt sehr gute Farbstoffeigenschaften und färbt die in der Beschreibung genannten Materialien, insbesondere Cellulosefasermaterialien, nach den für faserreaktive Farbstoffe üblichen Applikations-und Fixiermethoden in kräftigen, klaren, gelbstichig orangen Tönen mit guten Naßechtheitseigenschaften, wie insbesondere guten Waschechtheiten, guten Naßlichtechtheiten, wie insbesondere einer guten alkalischen Schweißlichtechtheit; darüber hinaus sind die mit der erfindungsgemäßen Verbindung erhältlichen Färbungen und Drucke nicht phototrop.

Beispiele 2 bis 28

In den nachfolgenden Tabellenbeispielen sind weitere erfindungsgemäße Verbindungen mit Hilfe ihrer Komponenten entsprechend einer allgemeinen Formel (A)

$D^1-N = N-K-NH-CH_2-SO_3H$ (A)

beschrieben. Sie lassen sich in erfindungsgemäßer Weise, beispielsweise nach dem obigen Ausführungsbeispiel 1, mittels der aus dem jeweiligen Tabellenbeispiel in Verbindung mit der allgemeinen Formel (A) ersichtlichen Komponenten (der Diazokomponente $D^1-NH_2$ und der Kupplungskomponente $H-K-NH-CH_2-SO_3H$) herstellen. Sie besitzen faserreaktive Farbstoffeigenschaften und liefern insbesondere auf Cellulosefasermaterialien nach den für faserreaktive Farbstoffe üblichen Applikations-und Fixiermethoden farbstarke, echte Färbungen und Drucke in dem in dem jeweiligen Tabellenbeispiel für Färbungen auf Baumwolle angegebenen Farbton.

| Bsp. | Verbindung der allg. Formel (A) mit ... D[1] gleich ... | H-K-$NH_2$ gleich .. | Farbton ($\lambda_{max}$ = ...nm) |
|---|---|---|---|
| 2 | 3-(ß-Sulfatoethylsulfonyl)-phenyl | 2,5-Dimethyl-anilin | rotstichig gelb |
| 3 | 2-Methyl-4-(ß-sulfatoethyl-sulfonyl)-phenyl | dito | orange |
| 4 | 2-Chlor-4-(ß-sulfatoethyl-sulfonyl)-phenyl | dito | rotstichig gelb |
| 5 | 2-Sulfo-4-(ß-sulfatoethyl-sulfonyl)-phenyl | dito | rotstichig gelb |
| 6 | 2-Sulfo-5-(ß-sulfatoethyl-sulfonyl)-phenyl | dito | rotstichig gelb |
| 7 | 2,5-Bis-(ß-sulfatoethyl-sulfonyl)-phenyl | dito | rotstichig gelb |
| 8 | 3,4-Bis-(ß-sulfatoethyl-sulfonyl)-phenyl | dito | rotstichig gelb |
| 9 | 8-Sulfo-6-(ß-sulfatoethyl-sulfonyl)-2-naphthyl | dito | rotstichig gelb |
| 10 | 1-Sulfo-6-(ß-sulfatoethyl-sulfonyl)-2-naphthyl | dito | rotstichig gelb |
| 11 | 6-(ß-Sulfatoethylsulfonyl)-2-naphthyl | dito | rotstichig gelb |
| 12 | 4-(ß-Sulfatoethylsulfonyl)-phenyl | 3-Methyl-anilin | rotstichig gelb (424) |
| 13 | dito | 2-Acetamino-5-ethoxy-anilin | rotstichig gelb (436) |
| 14 | dito | 2-Methyl-5-acetamido-anilin | orange (443) |
| 15 | dito | 3-Acetamido-anilin | orange (436) |
| 16 | dito | 2-Methoxy-5-acet-amido-anilin | rotstichig orange (474) |
| 17 | dito | 2-Methoxy-5-methyl-anilin | orange (463) |
| 18 | dito | 3-Methoxy-anilin | rotstichig gelb |
| 19 | dito | 2-Methoxy-5-methyl-anilin | rotstichig gelb |
| 20 | dito | 2,5-Diethyl-anilin | rotstichig orange |
| 21 | 4-(ß-Sulfatoethylsulfonyl)-phenyl | 6-Sulfo-1-amino-naphthalin | gelbstichig braun |

| Bsp. | Verbindung der allg. Formel (A) mit ... $D^1$ gleich ... | H-K-$NH_2$ gleich .. | Farbton ($\lambda_{max}$ = ...nm) |
|---|---|---|---|
| 22 | 3-(ß-Sulfatoethylsulfonyl)-phenyl | 6-Sulfo-1-amino-naphthalin | gelbstichig braun |
| 23 | 3-(ß-Sulfatoethylsulfonyl)-phenyl | 7-Sulfo-1-amino-naphthalin | dito |
| 24 | 4-(ß-Sulfatoethylsulfonyl)-phenyl | 7-Sulfo-1-amino-naphthalin | dito |
| 25 | 4-(ß-Sulfatoethylsulfonyl)-phenyl | 3,6-Disulfo-1-aminonaphthalin | dito |
| 26 | 3-(ß-Sulfatoethylsulfonyl)-phenyl | 3,6-Disulfo-1-aminonaphthalin | dito |
| 27 | 4-(ß-Sulfatoethylsulfonyl)-phenyl | 3-Chlor-6-methyl-anilin | rotstichig gelb (424) |
| 28 | 2-Brom-4-(ß-sulfatoethyl-sulfonyl)-phenyl | 2,5-Dimethyl-anilin | rotstichig gelb |

Anwendungsbeispiel 1

In eine Lösung aus 2 Teilen der erfindungsgemäßen Azoverbindung von Beispiel 1 und 50 Teilen wasserfreiem Natriumsulfat in 2000 Teilen Wasser gibt man bei 40°C 100 Teile eines Gewebes aus mercerisierter Baumwolle. Das Gewebe wird in dieser Färbeflotte 10 Minuten bewegt. Danach werden 10 Teile wasserfreies Natriumcarbonat zugesetzt und die Färbung bei 40°C noch 60 Minuten fortgeführt. Anschließend gibt man 5 Teile einer 33%igen Natronlauge hinzu und färbt 30 Minuten bei 40°C weiter.

Das gefärbte Gewebe wird danach aus der Färbeflotte herausgenommen und in üblicher Weise durch Spülen mit kaltem Wasser, Neutralisieren in einem wäßrigen, wenig Essigsäure enthaltenden Bad, durch Spülen mit heißem Wasser, durch kochende Behandlung in einem ein nichtionogenes Waschmittel enthaltenden Bad, durch nochmaliges Spülen mit heißem und kaltem Wasser und Trocknen fertiggestellt.

Man erhält gemäß den Angaben des Ausführungsbeispieles 1 eine farbstarke, nicht phototrope, gelbstichig orange Färbung mit guter Trockenlicht-und Naßlichtechtheit sowie einer sehr guten alkalischen Schweißlichtechtheit.

Anwendungsbeispiel 2

Ein Gewebe aus mercerisierter Baumwolle wird mit einer wäßrigen Färbeflotte, die pro Liter 10 Teile des Natriumsalzes der erfindungegemäßen Azoverbindung von Beispiel 1 sowie 20 Teile einer 33%igen Natronlauge enthielt, bei 20°C mit einer Flottenaufnahme von 80% (bezogen auf das Warengewicht) geklotzt. Das geklotzte Gewebe wird auf eine Docke gewickelt, in eine Folie geschlagen und 8 bis 10 Stunden bei etwa 40°C liegengelassen. Anschließend wird das Gewebe in der im Anwendungsbeispiel 1 angegebenen Weise fertiggestellt. Es wird wie im Anwendungsbeispiel 1 eine farbstarke, nicht phototrope, gelbstichig orange Färbung mit guter Trockenlicht-und Naßlichtechtheit sowie einer sehr guten alkalischen Schweißlichtechtheit erhalten.

Anwendungsbeispiel 3

Man stellt aus 10 Teilen der erfindungsgemäßen Azoverbindung des Beispieles 1, 50 Teilen Harnstoff, 250 Teilen warmem Wasser und 450 Teilen einer neutralen, etwa 4%igen wäßrigen Alginatverdickung eine dickflüssige Lösung der erfindungsgemäßen Azoverbindung her, in die anschließend 10 Teile Natriumcarbonat, in Form einer wäßrigen Lösung, und weitere Alginatverdickung (zur Auffüllung auf 1000 Teile) eingerührt werden. Mit der so hergestellten Druckpaste wird ein Baumwollgewebe bedruckt. Der Druck wird bei 60 bis 65°C getrocknet und anschließend zur Fixierung der erfindungsgemäßen Azoverbindung in einem handelsüblichen Dämpfer etwa 5 Minuten mt Sattdampf von 100 bis 105°C behandelt und danach in üblicher Weise durch Spülen mit kaltem und heißem Wasser, durch kochende Behandlung mit einer ein nichtionogenes Waschmittel enthaltenden wäßrigen Waschflotte und durch nochmaliges Spülen mit Wasser und Trocknen fertiggestellt.
Man erhält einen farbstarken, nicht phototropen, gelbstichig orangen Druck mit guten Trocken-und Naßlichtechtheiten sowie einer sehr guten alkalischen Schweißlichtechtheit.

**Ansprüche**

1. Eine wasserlösliche Azoverbindung, die der allgemeinen Formel (1)

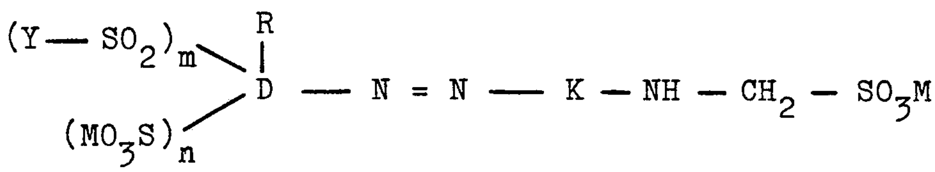

(1)

entspricht, in welcher bedeutet:
D ist ein Benzol-oder ein Naphthalinring;
R ist ein Wasserstoffatom, eine Alkylgruppe von 1 bis 4 C-Atomen, eine Alkoxygruppe von 1 bis 4 C-Atomen, die Hydroxygruppe, ein Chloratom, ein Bromatom oder eine Carboxygruppe;
K ist ein Rest der allgemeinen Formel (2a) oder (2b)

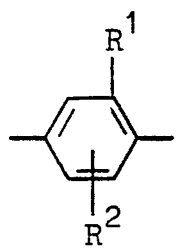

(2a)

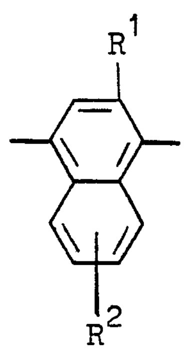

(2b)

in welchen
$R^1$ ein Wasserstoffatom, eine Alkylgruppe von 1 bis 4 C-Atomen, eine gegebenenfalls substituierte Alkoxygruppe von 1 bis 4 C-Atomen, ein Halogenatom, eine Sulfogruppe, die Ureidogruppe oder eine Alkanoylaminogruppe von 2 bis 5 C-Atomen ist und
$R^2$ ein Wasserstoffatom, eine Alkylgruppe von 1 bis 4 C-Atomen, eine Alkoxygruppe von 1 bis 4 C-Atomen, ein Halogenatom, eine Sulfogruppe, die Ureidogruppe oder eine Alkanoylaminogruppe von 2 bis 5 C-Atomen bedeutet;
M ist ein Wasserstoffatom, ein Alkalimetall oder das Äquivalent eines Erdalkalimetalls;
Y ist die Vinylgruppe oder eine Ethylgruppe, die in β-Stellung durch einen alkalisch eliminierbaren Substituenten substituiert ist;
m steht für die Zahl 1 oder 2;
n steht für die Zahl Null, 1 oder 2.

2. Verbindung nach Anspruch 1, dadurch gekennzeichnet, daß D ein Benzolring ist.

3. Verbindung nach Anspruch 1 oder 2, dadurch gekennzeichnet, daß R ein Wasserstoffatom oder die Methoxygruppe ist.

4. Verbindung nach Anspruch 1 oder 2, dadurch gekennzeichnet, daß R ein Wasserstoffatom ist.

5. Verbindung nach mindestens einem der Ansprüche 1 bis 4, dadurch gekennzeichnet, daß $R^1$ ein Wasserstoffatom, die Methyl-, Ethyl-, Methoxy-, Ethoxy-, Acetylamino-, Propionylamino-oder 2-Methoxyethoxy-Gruppe bedeutet.

6. Verbindung nach mindestens einem der Ansprüche 1 bis 5, dadurch gekennzeichnet, daß $R^2$ ein Wasserstoffatom, die Methyl-, Ethyl-, Methoxy-, Ethoxy-, Sulfo-, Acetylamino-oder Propionylamino-Gruppe bedeutet.

7. Verbindung nach mindestens einem der Ansprüche 1 bis 6, dadurch gekennzeichnet, daß n für die Zahl Null oder 1 steht.

8. Verbindung nach mindestens einem der Ansprüche 1, 5 und 6, dadurch gekennzeichnet, daß D ein Naphthylrest ist, R ein Wasserstoffatom bedeutet und n für die Zahl 1 oder 2 steht.

9. Verbindung nach mindestens einem der Ansprüche 1 bis 8, dadurch gekennzeichnet, daß m die Zahl 1 bedeutet.

10. Verbindung nach mindestens einem der Ansprüche 1 bis 9, dadurch gekennzeichnet, daß Y die Vinylgruppe oder eine $\beta$-Sulfatoethyl-Gruppe bedeutet.

11. Verbindung nach mindestens einem der Ansprüche 1 bis 9, dadurch gekennzeichnet, daß Y eine $\beta$-Sulfatoethyl-Gruppe ist.

12. Verfahren zur Herstellung einer Azoverbindung der in Anspruch 1 genannten und definierten allgemeinen Formel (1), dadurch gekennzeichnet, daß man ein Diazoniumsalz einer Aminoverbindung der allgemeinen Formel (3)

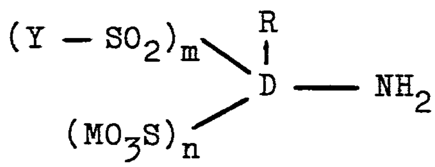

(3)

in welcher D, R, M, Y, m and n die in Anspruch 1 genannten Bedeutungen haben, mit einer Verbindung der allgemeinen Formel (4)

$H - K - NH - CH_2 -SO_3M$ (4)

in welcher K und M die in Anspruch 1 genannten Bedeutungen haben, kuppelt.

13. Verwendung einer Azoverbindung der in Anspruch 1 genannten und definierten allgemeinen Formel (1) als Farbstoff.

14. Verwendung nach Anspruch 13 zum Färben von hydroxy-und/oder carbonamidgruppenhaltigem Material, insbesondere Fasermaterial.

15. Verfahren zum Färben von hydroxy-und/oder carbonamidgruppenhaltigem Material, vorzugsweise Fasermaterial, bei welchem man einen Farbstoff auf das Material aufbringt oder in das Material einbringt und ihn mittels Wärme oder mit Hilfe eines säurebindenden Mittels oder mit Hilfe von Wärme und einem säurebindenden Mittel fixiert, dadurch gekennzeichnet, daß man als Farbstoff eine Azoverbindung entsprechend der im Anspruch 1 genannten und definierten allgemeinen Formel (1) einsetzt.

Europäisches Patentamt

# EUROPÄISCHER RECHERCHENBERICHT

Nummer der Anmeldung

EP 87 10 5844

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 051 808 (HOECHST)<br>* Anspruch 1 *<br>----- | 1 | C 09 B 62/51<br>D 06 P 1/384 |
| | | | **RECHERCHIERTE SACHGEBIETE (Int. Cl.4)** |
| | | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 21-07-1987 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82